# EUROPÄISCHE PATENTANMELDUNG

(11) **EP 1 277 526 A1**
(43) Veröffentlichungstag der Anmeldung: **22.01.2003**
(21) Anmeldenummer: 01130556.2
(22) Anmeldetag: 21.12.2001
(51) Int. Cl.: B09B 3/00, A62D 3/00, C04B 7/24

(54) **Verfahren zur thermischen Behandlung von Asbestzementprodukten**

(30) Priorität: 17.07.2001 DE 10133972
(71) Anmelder: MVG, Mineralfaser-Verwertungs-Gesellschaft mbH, 84028 Landshut (DE)
(72) Erfinder:
(74) Vertreter: Pausch, Thomas, Dipl.-Phys.

(57) **Zusammenfassung**

Die Erfindung betrifft ein Verfahren zur thermischen Behandlung von zu entsorgenden Asbestzementprodukten zur stofflichen Weiterverwertung asbesthaltiger Abfallprodukte, wobei die Asbestzementprodukte als Stückgut, jedoch ohne vorherige mechanische Aufbereitung der Bruchstücke einen Tunnelofen zugeführt werden, und bei Behandlungstemperaturen von ca. 1000 °C und einer Verweilzeit von wenigstens 30 min. die Kristallstruktur der Asbestfasern zerstört und infolgedessen die irreversible Bildung des Endproduktes erreicht wird, die ähnlich der üblichen Zusammensetzung normaler Portlandzemente ist, so dass ein physiologisch unbedenkliches, asbestfreies Zwischenprodukt zementähnlicher chemischer Zusammensetzung mit dem Charakter eines Sekundärrohstoffes entsteht, welches in der Zementindustrie als Bestandteil zur Bereitung der Rohmehlmischung für die Klinkerproduktion und/oder als Zementzumahlstoff Verwendung findet.

## Beschreibung

Die Erfindung betrifft ein Verfahren zur thermischen Behandlung von zu entsorgenden Asbestzementprodukten zur stofflichen Weiterverwertung asbesthaltiger Abfallprodukte. Die Erfindung betrifft ferner ein nach dem Verfahren hergestelltes Zwischenprodukt, welches in der Zementindustrie als Bestandteil zur Bereitung der Rohmehlmischung der Klinkerproduktion und/oder als Zementzumahlstoff Verwendung findet.

Asbestfasern wurden bis Anfang der 80er Jahre aufgrund ihrer hervorragenden strukturverfestigenden, isolierenden und feuerfesten Eigenschaften in einer Vielzahl von Produkten verwendet. Mit einem Anteil von über 60 % ging die Hauptmasse der Asbeste dabei in zementgebundene Bauprodukte. Nach den Statistiken der faserverarbeitenden Industrie lag der Höhepunkt des Asbesteinsatzes in den Jahren zwischen 1960 und 1980, obwohl die gesundheitsgefährdende Wirkung der Fasern bereits seit den 20er Jahren bekannt war und die sogenannte Asbestose schon 1940 in Deutschland als Berufskrankheit anerkannt worden war. Durch die intensive Suche nach Ersatzstoffen kam die Verwendung der Asbestfasern in Baustoffen bis zum gesetzlichen Verbot (Asbestverbotsverordnung von 1991) und weiten Bereichen fast vollständig zum Erliegen. So wurden 1989 in der Bundesrepublik Deutschland nur noch weniger als 40.000 t Asbest (davon die Hälfte als Asbestzement) gegenüber 190.000 t im Jahr 1976 verwendet. Auslöser für Krankheiten infolge von Asbestkontaminierung sind insbesondere feine und feinste Fasern, die bei unsachgemäßer Verarbeitung, beim Abrieb, bei Verwitterung oder Alterungszerfall eingebauter Produkte freigesetzt werden können. Um zukünftige Gefährdungen zu vermeiden, ist es erforderlich, asbesthaltige Baustoffe auf Dauer sicher zu entsorgen. Derzeit werden asbesthaltige Abbruchmaterialien weitgehend auf Deponien gebracht. Um derartige Asbestzement-Erzeugnisse als potentiellen Sekundärrohstoff an Naturkreisläufen sich orientierenden Wirtschaftskreisläufen nutzen zu können, soll für die Zementherstellung ein aus Asbestzement mit seiner weitgehend konstanten chemischen Zusammensetzung ein Zwischenprodukt zur Verfügung gestellt werden, das frei von gesundheitsgefährdenden Faserstoffen ist und damit ohne jegliche physiologische und ökologische Belastung als Rohstoff bei der Zementherstellung eingesetzt werden kann.

Erfindungsgemäß wird die Aufgabe dadurch gelöst, dass asbestenthaltendes Abfallmaterial in Form des aus dem Wirtschaftskreislauf herausgenommenen Faser-Bindemittel-Kombinationswerkstoffs "Asbestzement" als potentieller Sekundärrohstoff verstanden wird, einen thermischen Prozess unterworfen wird, der die Umwandlung der Asbeste bedingt, und in der Folge in der Zementindustrie als Bestandteil zur Bereitung der Rohmehlmischung der Klingerproduktion und/oder als Zementzumahlstoff Verwendung finden kann. Mit dem erfindungsgemäßen Verfahren gelingt es, eine asbestfreie und mineralisch schwach gebundene Masse zu bilden, die als Sekundärrohstoff weiterverwendet werden kann.

Nach dem erfindungsgemäßen Verfahren nach Anspruch 1 ist vorgesehen, dass die Asbestzementprodukte bzw. asbesthaltigen Abfallprodukte unmittelbar nach Anlieferung bzw. Zwischenlagerung als Stückgut, d.h. im wesentlichen ohne vorherige mechanische Aufbereitung der Bruchstücke, einem Tunnelofen zugeführt werden, und dort bei Behandlungstemperaturen von etwa 1000 °C ± 100 °C und bei einer Verweilzeit von wenigstens 30 min. die Kristallstruktur der Asbestfasern zerstört und infolgedessen die irreversible Bildung des Endproduktes erreicht wird, die ähnlich der üblichen Zusammensetzung normaler Portlandzemente ist, so dass ein physiologisch unbedenkliches, asbestfreies Zwischenprodukt zementähnlicher chemischer Zusammensetzung mit dem Charakter eines Sekundärrohstoffes für die Zementindustrie oder für andere technische Anwendungen oder Prozesse entsteht.

Mit der Erfindung gelingt die stoffliche Verwertung von Asbestzementabfällen nach den Vorlagen des Kreislaufwirtschafts/Abfallgesetzes, und damit Schaffung eines Entsorgungskonzeptes für Asbestzemente, das die vollständige Zerstörung der gesundheitsschädlichen Asbestfasern und die Möglichkeit der weiteren Verwendung der behandelten bzw. gewonnenen Stoffe vorsieht.

Das erfindungsgemäße Verfahren beinhaltet die vollständige Zerstörung der Asbestfasern durch thermische Behandlung. Eine mechanische Aufbereitung der Bruchstücke vor der thermischen Behandlung ist nicht vorgesehen, um eine Faserfreisetzung auszuschließen.

Verfahrenstechnisch hat sich die thermische Behandlung der stückigen Asbestzementprodukte im Tunnelofen als geeignet erwiesen.

Als besonders vorteilhaft hat sich herausgestellt, wenn das Material zunächst aufgeheizt wird. Die Aufheizzeiten betragen mindestens 30 min.. Anschließend erfolgt die eigentliche Wärmebehandlung.

Die Temperatur des Tunnelofens wird so eingestellt, dass einerseits Verpuffungsreaktionen durch entweichendes Kristallin, gebundenes Wasser oder CO₂ vermieden wird, und andererseits die vollständige Faserzerstörung erreicht wird. Es haben sich Temperaturen von etwa 1000 °C und einer Verweilzeit von mindestens 30 min. als ausreichend erwiesen, um die Zerstörung der Asbestfasern herbeizuführen.

Je nach Mächtigkeit der zugeführten Asbestzement-Plattenstapel kann eine Anpassung der Maximaltemperatur oder der Haltezeit erforderlich sein, um eine ausreichende Wärmeeinkopplung zur vollständigen Faserzerstörung auch im Innern der Stapel zu gewährleisten.

Die chemische Zusammensetzung des Endproduktes, die ähnlich der üblichen Zusammensetzung normaler Portlandzemente ist, sowie der Gehalt an hydraulischen Phasen, insbesondere C₂S, ermöglicht eine Verwertung der getemperten Asbestzementprodukte als eigenständiges Bindemittel, als Hauptbestandteil bei der Zementherstellung oder als Rohmehlkomponente zur Klinkerherstellung.

Festigkeitsuntersuchungen an Mörtelmischungen mit bebranntem Asbestzement und Sulfatträger haben gezeigt, dass die hydraulischen Eigenschaften der Rückstände nicht ausreichen, um ein eigenständiges Bindemittel herzustellen. Der Einsatz des getemperten Materials als Zumahlstoff ist hingegen möglich. Durch Vermischen mit Portlandzementklinker und Sulfatträger wurden Zemente mit ähnlich hoher Leistungsfähigkeit wie Portlandzement hergestellt.

Insbesondere die Druckfestigkeitsniveaus der reinen Portlandzemente nach 28 und 90 Tagen konnten bei Zugabe von bis zu 15 Gew.-% gebrannten und anschließend gemahlenen Asbestzements erhalten werden. Die hohen Gehalte an Periklas und Freikalk führen allerdings zu einer Herabsetzung der Raumbeständigkeit.

Erste Untersuchungen haben gezeigt, dass eine ausreichende Raumbeständigkeit erzielt werden kann, wenn das Verhältnis von gebranntem Asbestzement zu Portlandzement deutlich weniger als 15:85 beträgt.

Die Verwendung als Klinkerrohmehl ist grundsätzlich möglich, wenn durch Zugabe weiterer Rohmehlkomponenten der CaO-Gehalt angehoben wird, so dass der Kalkstandard des entsprechenden Klinkers ausreichend hoch ist und gleichzeitig die hohen MgO-Gehalte des gebrannten Asbestzements ausreichend verdünnt werden.

Der Asbestzement wird entsprechend der Anforderungen der Technischen Regeln für Gefahrstoffe - Asbest, Abbruch-, Sanierungs- und Instandhaltungsarbeiten von 1994 in Plattenform geliefert. Dabei wird der Asbestzement entsprechend diesen technischen Regeln in feuchtem Zustand und zudem in Kunststofffolien, sogenannten "big bags" mit Lastkraftwagen verschlossen angeliefert, vorsichtig mit dem Stapler abgeladen und auf dem Betriebsgelände gelagert. Diese Arbeitsweise vermeidet ein Abbrechen und Freisetzen von Asbestfaser bei allen Handlungen, Umladungen etc. dadurch, dass die Asbestplatten nicht abgekippt oder geworfen werden, sondern mittels Gabelstapler gehoben und geladen werden. Demgegenüber erfolgte bei den bisherigen Verfahren die größte Faserfreisetzung beim mechanischen Zertrümmern von Asbestzementprodukten. Eine solche Arbeitsweise ist nach der Erfindung nicht mehr erforderlich.

Mit dem Stapler werden die verpackten Platten zum Bearbeitungsort im Freien transportiert, dort werden die big bags vorsichtig geöffnet und entfernt, und die Platten Zug um Zug unter Verwendung von Hand oder mit Hebezeugen und Nässen, vorsichtig zu Transportstapeln für den Tunnelofentransport gestapelt. Bei den durchzuführenden Stapelarbeiten im Freien wird zum Auffangen etwa herabfallender Bruchstücke die Fläche mit einer Plane oder Folie ausgelegt. Diese Kunststofffolie bzw. Plane wird mit geeigneten Staubsaugern regelmäßig gereinigt. Außerdem wird sichergestellt, dass Fenster oder sonstige Bauwerksöffnungen im unmittelbaren Arbeitsbereich geschlossen gehalten werden.

Bei unbeschichteten Dach- oder Faserplatten besteht die Gefahr, dass unmittelbar an der Oberfläche haftende Asbestfasern infolge von Verwitterung nur mehr eine geringe Bindung aufweisen und schon bei geringer Beanspruchung freigesetzt werden. Um dies zu vermeiden, werden die Platten während der Arbeit feucht gehalten oder mit staubbindenden Mitteln besprüht.

Im Falle einer notwendigen Lagerung wird dafür Sorge getragen, dass die Asbestzementplatten entsprechend der technischen Regeln ständig feucht gehalten und abgedeckt werden. Bei beschichteten Asbestzementprodukten ist eine Oberflächenbehandlung wird Wasser oder Staubbindemitteln nicht erforderlich. Wird mit Wasser genässt, kann dieses wie Regenwasser abgeleitet werden.

Unter Beachtung dieser Sicherheitsvorkehrungen ist ein Freisetzen von Asbestfasern bei der Anlieferung und der gegebenenfalls erforderlichen Lagerung grundsätzlich auszuschließen.

## Patentansprüche

1. Verfahren zur thermischen Behandlung von zu entsorgenden Asbestzementprodukten, insbesondere zur stofflichen Weiterverwertung asbesthaltiger Abfallprodukte,
**dadurch gekennzeichnet,**
**dass** die Asbestzementprodukte bzw. asbesthaltigen Abfallprodukte unmittelbar nach Anlieferung bzw. Zwischenlagerung als Stückgut, d.h. im wesentlichen ohne vorherige mechanische Aufbereitung der Bruchstücke, einem Tunnelofen zugeführt werden, und dort bei Behandlungstemperaturen von etwa 1000 °C ± 100 °C und bei einer Verweilzeit von wenigstens 30 min. die Kristallstruktur der Asbestfasern zerstört und infolgedessen die irreversible Bildung des Endproduktes erreicht wird, die ähnlich der üblichen Zusammensetzung normaler Portlandzemente ist, so dass ein physiologisch unbedenkliches, asbestfreies Zwischenprodukt zementähnlicher chemischer Zusammensetzung mit dem Charakter eines Sekundärrohstoffes für die Zementindustrie oder für andere technische Anwendungen oder Prozesse entsteht.

2. Verfahren nach Anspruch 1,
**dadurch gekennzeichnet,**
**dass** die Asbestzementprodukte einer vorherigen Aufheizung bei etwa 180 °C während einer Aufheizzeit von mindestens 30 min. unterzogen werden.

3. Verfahren nach Anspruch 1 oder 2,
**dadurch gekennzeichnet,**
**dass** die Behandlungstemperatur im Tunnelofen dergestalt gesteuert wird, dass einerseits Verpuffungsreaktionen durch entweichendes Kristallin, gebundenes Wasser oder CO₂ vermieden wird, und andererseits die vollständige Faserzerstörung erreicht wird.

4. Verfahren nach einem der vorhergehenden Ansprüche,
**dadurch gekennzeichnet,**
**dass** der Gehalt des Endproduktes an hydraulischen Phasen, insbesondere C₂S ausreichen hoch für eine Verwertung der getemperten Asbestzementprodukte als eigenständiges Bindemittel, als Hauptbestandteil bei der Zementherstellung oder als Rohmehlkomponente zur Klinkerherstellung ermöglich wird.

5. Zwischenprodukt herstellt nach Anspruch 1 bis 4,
**dadurch gekennzeichnet,**
**dass** es in der Zementindustrie als Bestandteil zur Bereitung der Rohmehlmischung für die Klinkerproduktion und/oder als Zementzumahlstoff Verwendung findet.
